# EUROPEAN PATENT APPLICATION

(11) **EP 2 566 017 A1**
(43) Date of publication of application: **06.03.2013**
(21) Application number: 11179876.5
(22) Date of filing: 02.09.2011
(51) Int. Cl.: H02K 7/102, H02K 7/18, H02K 15/00, H02K 3/50

(54) **Generator**

(71) Applicant: SIEMENS AKTIENGESELLSCHAFT, 80333 München (DE)
(72) Inventor: Le Besnerais, Jean, 59370 Mons en Baroeul (FR)

(57) **Abstract**

Generator (1), particularly for a wind turbine (2), comprising a rotor (4) (4) having at least one rotor (4) brake disc (21) attached thereto, wherein the generator (1) has an outer rotor (4) - inner stator (5) configuration, whereby the rotor brake disc (21) extends in radial outward direction with respect to a centre axis (19) of the generator (1), or the generator (1) has an outer stator (5) - inner rotor (4) configuration, wherein the rotor brake disc (21) extends in radial inward direction with respect to a centre axis (19) of the generator (1).

## Description

The invention relates to a generator, particularly for a wind turbine, comprising a rotor having at least one rotor brake disc attached thereto.

In known manner, electric machines such as generators or electric motors convert mechanical energy into electric energy or vice versa. During operation of respective electric machines, thermal losses may occur which may reduce efficiency or even lead to damages.

Regarding a conventional generator, thermal or copper losses regularly have to be encountered in the region of the end or overhang windings, i.e. respective sections of stator windings axially extending off the stator yoke. That is, the design of the end or overhang windings is regularly not optimised regarding respective thermal losses. Hence, proper cooling of the generator or respective components of the generator, i. e. mainly the stator and the rotor has to be assured. For instance, cooling may be achieved by axially blowing a gaseous cooling medium such as air into the air-gap between the stator and the rotor.

Respective thermal losses may also be based on demagnetisation effects of permanent magnets of the rotor due to short circuits, high temperature, etc. since respective demagnetisation effects usually lead to an increase of stator currents. Thus, respective demagnetised permanent magnets have to be replaced which is oftentimes related to cumbersome and costly maintenance works.

Regarding both cooling of the generator as well as its serviceability radially extending rotor brake discs may be an inhibiting factor since respective rotor brake discs obstruct axially accessing the air-gap. Hence, they have to be removed in order to access the air-gap.

Hence, it is the object of the invention to provide an improved generator, particularly regarding its cooling behaviour as well as serviceability.

This is inventively achieved by a generator as initially described, wherein the generator has an outer rotor - inner stator configuration, whereby the rotor brake disc extends in radial outward direction with respect to a centre axis of the generator, or the generator has an outer stator - inner rotor configuration, wherein the rotor brake disc extends in radial inward direction with respect to a centre axis of the generator.

The inventive principle provides a generator, whereby axially accessing the air-gap between the rotor and the stator is not inhibited by respective rotor brake disc since the rotor brake disc radially extends off the air-gap. I.e., the rotor brake disc does not obstruct axially accessing the air-gap since no section of the rotor brake disc radially extends along the axial openings of the air-gap. Generally, the inventive principle is based on the idea to turn the rotor brake disc away from the air-gap in radial direction. Hence, axially accessing the air-gap is always possible. Particularly, a removal of the rotor brake disc is not necessary for axially accessing the air-gap.

In such a manner, the cooling properties of the generator may be improved since a gaseous cooling medium (such as air for instance) may flow through the air-gap in undisturbed manner. Furthermore, the inventive principle allows better isolation of a gaseous cooling medium flowing within the generator from corrosive particles originating from air pollution, for instance. Hence, corrosion effects of the generator may be reduced giving rise to an enhanced life time.

Likewise, serviceability may be improved since respective components of the generator, particularly of the rotor such as permanent magnets or the like, may be easily inserted or removed in axial direction. Hence, service and repair works are easily feasible.

The inventive principle is both applicable for generators having an outer rotor - inner stator configuration, whereby the stator is disposed within the rotor, as well as generators having an outer stator - inner rotor configuration, whereby the rotor is disposed within the rotor.

Of course, all respective components of the generator or a respective housing accommodating the generator are properly adapted to the constructive arrangement of the rotor brake disc. I. e., particularly respective brake callipers or the like are correspondingly disposed to the rotor brake disc so that proper operation of the rotor brake disc is always assured.

It is preferred that the stator comprises a stator yoke having a number of axially extending stator windings ending in respective end windings, whereby three circumferentially adjacently disposed stator windings build a respective set of stator windings, whereby, regarding a respective set of stator windings, in relation to an axial centre axis of the generator, first end windings perpendicularly extend off the stator yoke in radially outward direction, second end windings extend off the stator yoke in axial direction, and third end windings perpendicularly extend off the stator yoke in radially inward direction at at least one face side of the generator.

Hence, this embodiment refers to a novel design of respective end windings, i.e. respective sections of stator windings extending off the stator yoke. The stator windings are separately received in respective axial slots of the stator yoke, i.e. each slot receives a single stator winding.

Thereby, with respect to a centre axis of the generator or stator respective end windings may either perpendicularly extend off the stator yoke in radially outward direction (first end windings), extend off the stator yoke in axial direction (second end windings), or perpendicularly extend off the stator yoke in radially inward direction (third end windings). Preferably, the respective first, second and third end windings are circumferentially arranged in alternating manner, i.e. respective first end windings are preferably neighbouring second or third end windings in circumferentially direction, respective second end windings are preferably neighbouring first or third end windings in circumferentially direction, and respective third end windings are preferably neighbouring first or second end windings in circumferentially direction.

For a better understanding of the respective design of end windings, theoretically dividing the end windings in respective sections may be helpful. In such a manner, respective end windings comprise a first section directly leaving the stator yoke, a respective, essentially u-shaped, second section following the first section, and a third section re-entering into the stator yoke following the second section.

Hence, the second section is disposed in between a respective first and third section so that a second section interconnects a respective first section with a respective third section, or vice versa. The second section may also be understood as the free end of a respective end winding. First and third sections usually have the same shape and/or orientation.

Regarding respective first end windings, the first section is bent in radial outward direction, so that the second section essentially extends in radial and circumferential direction, i.e. the opening of the "U" faces in radial inward direction. The third section is bent analogous to the first section since the first and third sections correspond in shape and orientation. Hence, the first end windings appear as an inversed "U" when axially looking at a respective face side of the stator.

Regarding respective second end windings, the first section extends in axial direction, the second section shares the same radial plane as the first section and essentially extends in circumferential direction. The third section has the same orientation as the first section, i.e. also extends in axial direction. Hence, the second end windings appear as a "U" when radially looking at the outer or inner diameter of the stator.

Regarding respective third end windings, the first section is bent in radial inward direction so that the second section essentially extends in radial direction, i.e. the opening of the "U" faces in radial outward direction. The third section is bent analogous to the first section since the first and third sections correspond in shape and orientation. Hence, the first end windings appear as a regular "U" when axially looking at a respective face side of the stator.

The inventive design of respective end windings may be denoted as -90°/0°/+90° or +90°/0°/-90°, respectively. Thereby, the numbers indicate the angle or bending angle of the end windings relative to the axial centre axis of the generator, i.e. +90°/-90° refers to end windings perpendicularly extending in radial outward or inward direction relative to the centre axis and 0° refers to end windings extending in parallel to the centre axis.

The inventive design of end windings may be provided on both or either only on one face side of the stator or generator, respectively.

As will be seen with exemplary embodiments, the inventive design of end windings provides circumferentially regularly arranged insertion slots between respective circumferentially neighbouring first or third end windings, which allow an axial insertion of respective components of the rotor such as particularly permanent magnets.

Each respective stator winding is related to a specific current phase. Regarding a three-phase generator, each set of stator windings comprises three stator windings differing in current phase. Thus, the inventive principle assures that the respective different phases have the same electrical resistance leading to balanced currents. The inventive principle is based on a one slot per phase arrangement with each stator slot receiving one stator winding.

It is preferred that respective sets of stator windings are circumferentially repeatedly disposed in adjacently first, second and third sets of stator windings, whereby each set of stator windings comprises differently circumferentially arranged first, second, and third end windings. Hence, when denoting first sets of stator windings with "A", second sets of stator windings with "B", and third sets of stator windings with "C" respective first (A), second (B), and third (C) sets of stator windings are adjacently disposed in circumferential direction according to the principle ABC, ABC, ABC, etc. The respective first (A), second (B), and third (C) sets of stator windings each contain three respective stator windings. The end windings of the stator windings of the respective sets of stator windings differ in their orientation, i.e. their arrangement or respective first, second and third end windings.

According to a preferred embodiment, respective sets of stator windings are circumferentially repeatedly disposed in adjacent first, second, and third sets of stator windings, whereby a first set of stator windings has a configuration of first end windings followed by second end windings followed by third end windings, a second set of stator windings being adjacently disposed to the first set of stator windings has a configuration of second end windings followed by third end windings followed by first end windings, and a third set of stator windings being adjacently disposed to the second set of stator windings has a configuration of third end windings followed by first end windings followed by second end windings.

Hence, according to this embodiment, the circumferential arrangement of respective first (1), second (2), and third (3) end windings of respective first (A), second (B), and third (C) sets of stator windings is A:123, B:231, C:312, A:123, B:231, C:312, etc.

Of course, diverse other arrangements of respective first (1), second (2), and third (3) end windings of respective first (A), second (B), and third (C) sets of stator windings are possible. The following is a non-terminatory listing of respective examples:
A:132, B:231, C:321, A:132, B:231, C:321, etc., or
A:321, B:123, C:132, A:321, B:123, C:132, etc., or
A:312, B:123, C:312, A:312, B:123, C:312, etc.

Generally, regarding a respective group of first (A), second (B), and third (C) sets of stator windings, it is preferred, that the circumferential gap between respective first (1) or third (3) end windings, i.e. the gap between respective first (1) end windings and circumferentially following or successive first (1) end windings extends about more than three axial slots of the stator yoke, whereby - as mentioned above - each slot receives a single stator winding. As can be seen in the above mentioned examples, there is always a distance of four respective stator slots between the first (1) or third (3) end windings of the respective first (A) and second (B) sets of stator windings.

It is possible that the radial dimensions of first or third end windings exceed the radial dimensions of an air-gap between the rotor and stator. This allows an axially compact design of the stator and generator as a whole since the respective first and third end windings extend in radial direction, merely the second end windings extend in axial direction.

The rotor may comprise a rotor frame supporting the rotor, with the rotor frame comprising a radial extending section, whereby respectively orientated sets of end windings are only built on the axial face side of the stator that is turned away from the radially extending section of the rotor frame. Hence, as mentioned above, the inventive design of respective end windings may only be applied to a single or both face sides of the stator. Thereby, it is preferred that the mentioned design of respective end windings is only applied to the non-drive end of the generator. As far as the generator is provided as a power generating unit of a wind turbine, the non-drive end is defined as the respective side of the generator turned away from the rotor hub, whereas the drive end of the generator is defined as the respective side of the generator facing the rotor hub.

It is of advantage when the rotor comprises axially extending receiving sections, particularly recesses, whereby a respective receiving section is adapted to at least partially receive at least one permanent magnet or at least one base plate supporting at least on permanent magnet. The receiving sections may be provided as axial slots, grooves or the like. The cross-section of a respective receiving section is adapted to the cross-section of a respective component of the rotor, i.e. a permanent magnet or a respective base plate supporting at least one permanent magnet. Hence, respective components of the rotor easily fit or may be easily inserted in respective receiving section in axial direction.

The rotor may comprise at least one radially extending projection abutting the axial end of a respective receiving section. The radial extending projection may be deemed as a stop or blocking element defining a respective axial position of the free ending of an inserted or to be inserted component of the rotor. Preferably, the respective radially extending projection is disposed at an axial position corresponding to a face side of the rotor.

It is advisable that one face side of a permanent magnet of the rotor comprises at least one handle means. The handle means facilitates handling of a respective permanent magnet, i.e. axially inserting or taking out respective permanent magnets from the rotor, i.e. particularly respective axially extending receiving sections. A respective handle means is preferably detachably connectable to a corresponding connection means of a hoisting means.

It is possible that the stator and/or rotor is built of a number of rotor segments and/or stator segments adapted to build the rotor or stator when assembled. Hence, the rotor and/or stator of the generator may be segmented in respective, particularly ring-segment-like shaped, rotor segments and stator segments, respectively. Segmenting of the rotor and/or stator in respective rotor or stator segments offers advantages regarding transportation as well as service and maintenance.

Aside, the invention relates to a wind turbine, particularly a direct drive wind turbine, comprising a generator as described above. The wind turbine may be an offshore-wind turbine.

Moreover, the invention relates to a method for mounting a generator, particularly the generator as described above. The method comprises the steps of providing a rotor having at least one rotor brake disc attached thereto, whereby the rotor brake disc extends in radial outward or inward direction with respect to a centre axis of the rotor, with the rotor comprising a number permanent magnets, axially inserting a stator inside the rotor if the rotor brake disc extends in radial outward direction, or axially inserting the rotor inside a stator if the rotor brake disc extends in radial inward direction.

Hence, when mounting a generator having an outer rotor - inner stator configuration at first a respective rotor is provided. The rotor is pre-assembled and already comprises a respective rotor brake disc attached thereto as well as all respective components of the rotor, i.e. particularly permanent magnets are already mounted to the rotor. In the following step, a pre-assembled stator including all respective components of the stator, i.e. particularly respective stator windings, is provided and inserted into the rotor (hot marriage). In this alternative, the rotor brake disc extends in radial outward direction with reference to a centre axis of the generator.

When mounting a generating having an outer stator - inner rotor configuration, also a respective pre-assembled rotor is provided, i.e. the rotor comprises all respective components being necessary for its operation, i. e. particularly a rotor brake disc as well as respective permanent magnets. In a second step, the rotor is inserted into a pre-assembled stator. In this alternative, the rotor brake disc extends in radial inward direction with reference to a centre axis of the generator.

Preferably, the used generator comprises circumferentially insertion slots for inserting respective components of the rotor, particularly permanent magnets of the rotor, with the insertion slots being provided by building sets of stator windings, with each set of stator windings comprising three circumferentially adjacently disposed stator windings, whereby, regarding a respective set of stator windings, in relation to an axial centre axis of the stator, first end windings perpendicularly extend off the stator yoke in radially outward direction, second end windings extend off the stator yoke in axial direction, and third end windings perpendicularly extend off the stator yoke in radially inward direction at at least one face side of the stator.

It is advisable that at least one spacer element is inserted in an air-gap between the stator and the rotor after axially inserting a stator inside the rotor if the rotor brake disc extends in radial outward direction, or axially inserting the rotor inside a stator if the rotor brake disc extends in radial inward direction. In such a manner, it can be avoided that the rotor collapses on the stator due to magnetic interactions between the permanent magnets of the rotor and the stator windings of the stator. The spacer elements may be in the shape of axially extending bars disposed between the stator and the rotor, i. e. within the air-gap. In such a manner, the mounted generator may be easily transported, whereby it is thinkable that the rotor brake disc may be mounted when the generator is provided at a respective installation site.

In the following, the invention is described in detail as reference is made to the principle figures, whereby:
- Fig. 1: shows a cut view of an inventive generator disposed within a wind turbine;
- Fig. 2: shows an enlarged view of the detail in fig. 1; and
- Fig. 3: shows a perspective view of a respective set of stator windings of a stator.

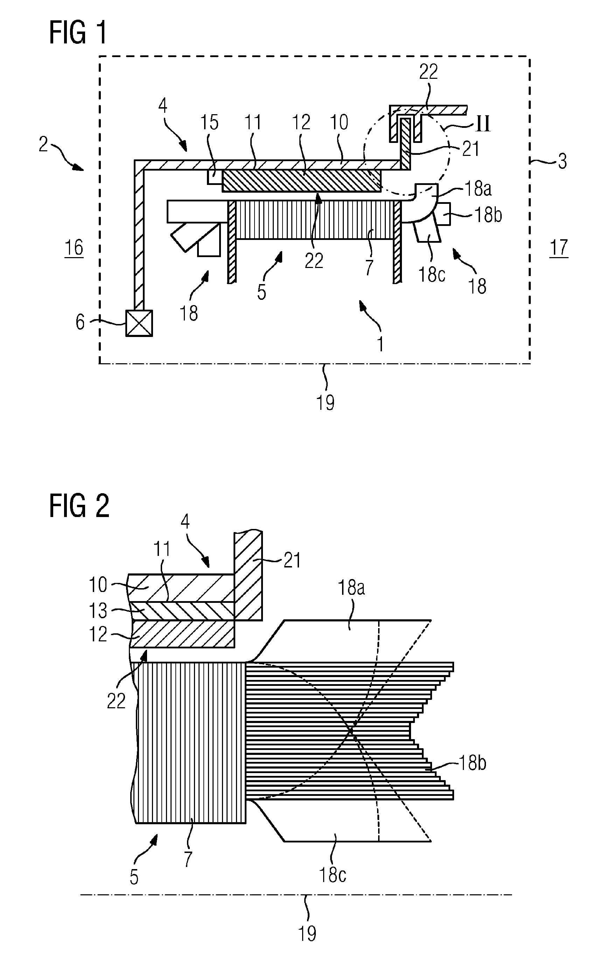

Fig. 1 shows a principle cut view of an inventive generator 1 disposed within a wind turbine 2, i. e. the nacelle 3 of the wind turbine 2. The wind turbine 2 is a direct drive wind turbine. The generator 1 serves as the power generator unit of the wind turbine 2.

In known manner, the generator 1 comprises a rotor 4 and a stator 5 with the rotor 4 being rotatable supported relative to the stator 5 by means of respective bearings 6. Both the rotor 4 and stator 5 may be built of respective ring-segment-like shaped rotor or stator segments. The generator 1 has an outer rotor 4 - inner stator 5 configuration.

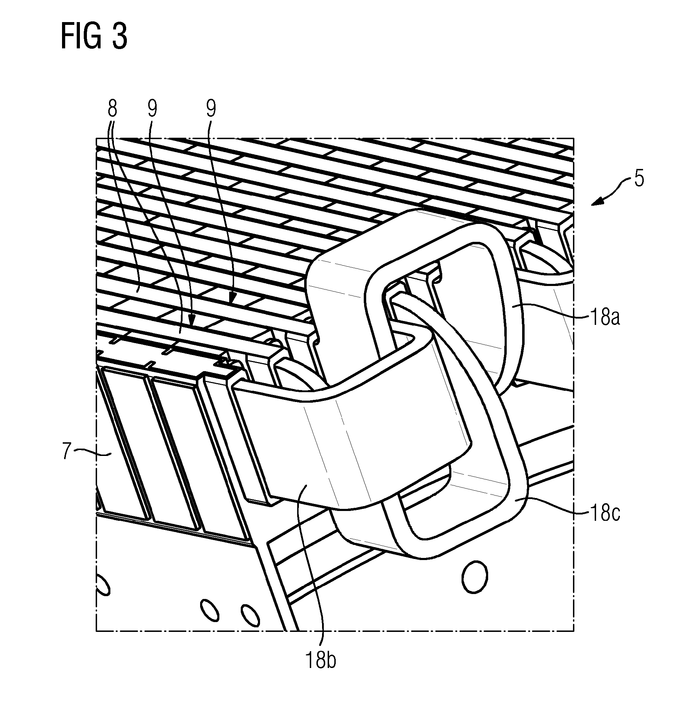

The stator 5 comprises a stator yoke 7 consisting of a number of axially aligned metal plates (not shown) building a number of circumferentially uniformly aligned axial slots 8 (cf. fig. 3). Each slot 8 receives or accommodates stator windings 9 made of copper or aluminium for instance. Thereby, a configuration of one slot 8 per pole and per phase is provided, i. e. circumferentially neighbouring stator windings 9 differ in their current phase.

The rotor 4, i. e. a rotor frame 10 comprises axially extending receiving sections in the shape of axially extending recesses 11. The respective recesses 11 are adapted to at least partially receive a permanent magnet 12 or a respective permanent magnet 12 attached to a base plate 13 (cf. fig. 2). Hence, respective permanent magnets 12 may be easily inserted or taken out from respective recesses 12 in axial direction. Thereby, it is of advantage that respective permanent magnets 12 comprise a handling means disposed at at least one face side (not shown) facilitating axial movements of the permanent magnets 12 within the recesses 11.

The rotor frame 10 comprises a radially extending projection 15 abutting the axial end of a respective receiving section, i. e. a respective recess 11. The projection 15 serves as a blocking or stopping means inhibiting axial movements of respective permanent magnets 12 when completely inserted. Hence, a permanent magnet 12 axially abuts the projection 15 when completely inserted.

The generator 1 has a drive end 16, i. e. the left side of the generator 1 and a non-drive end 17, i. e. the right side of the generator 1. The drive end 16 faces the rotor hub (not shown) of the wind turbine 2, whereas the non-drive end 17 is turned away from the rotor hub of the wind turbine 2.

As is discernible, the configuration or orientation of respective end windings 18 (or overhang windings) is different at the drive end 16 in comparison to the non-drive end 17. The configuration of respective end windings 18 extending off the stator yoke 7 at the drive end 16 is 0°/-45°/-90° with respect to the axial centre axis 19 of the generator 1 or stator 5 respectively. The respective end windings 18 extending off the stator yoke 7 at the non-drive end 17 of the generator 1 are configured in 90°/0°/-90° arrangement with respect to an axial centre axis 19 of the generator 1 (cf. also fig. 2, 3).

The arrangement of respective end windings 18 in 90°/0°/-90° is best to understand when theoretically grouping three circumferentially adjacently disposed stator windings 9 to a respective set of stator windings A, B, C. Hence, each set of stator windings A, B, C comprises three circumferentially adjacently disposed stator windings 9. Regarding a respective set of stator windings A, B, C as shown in fig. 3 for instance, first end windings 18a perpendicularly extend off the stator yoke 7 in radial outward direction, second end windings 18b extend off the stator yoke 7 in axial direction, and third end windings 18c perpendicularly extend off the stator yoke 7 in radial inward direction with respect to the axial centre axis 19 of the generator 1.

In such a manner, different phases always have the same electrical resistance so that balanced currents may be assured. Aside, a circumferential gap 20 is built between respective circumferentially successive first or third end windings 18a, 12b of adjacently disposed sets of stator windings A, B. The circumferential gap 20 is ready to accommodate respective components of the rotor 4, i.e. particularly permanent magnets 12, of the rotor 4. As already mentioned, the permanent magnets 12 are preferably attached to a base plate 13.

The core of the present invention lies in the arrangement of the rotor brake disc 21 serving as a braking or stopping means of rotational movements of the rotor 4 when interacting with the respective brake calliper 22 disposed with a structural component of the generator 1 or nacelle 3 of the wind turbine 1 for instance.

As is discernible, the rotor brake disc 21, which may be detachably or non-detachably attached to the rotor 4 extends in radial outward direction. Thus, the air-gap 14 extending between the rotor 4 and the stator 5 is freely accessible at all times from an axial direction leading to improvements regarding serviceability, particularly concerning the axial insertion or removal of respective components of the rotor 4 such as mainly the permanent magnets 12 since respective components of the rotor 4 may easily be axially mounted or demounted from the rotor frame 10. Aside, the cooling behaviour of the generator 1 may be improved since the flow of a gaseous cooling medium is possible in undisturbed manner.

The inventive principle also provides a reduction of pollution of the gaseous cooling medium by foreign particles since the gaseous cooling mediums circulating within the generator 1 is better isolated from outer air pollution leading to a reduction of corrosion effects in the generator 1.

The inventive principle also allows eased and improved mounting of the generator 1, since in a first step a rotor 4 having at least one rotor brake disc 21 attached thereto, whereby the rotor brake disc 21 extends in radial outward direction with respect to the centre axis 19 of the rotor 4 and additionally respective permanent magnets 12 has to be provided. In a following second step, a pre-assembled stator 5 has to be axially inserted inside the rotor 4. Thereby, axial insertion of the stator 5 within the rotor 4 is not inhibited by the brake disc 21 due to its orientation in radial outward direction. Hence, the inner diameter of the rotor 4 is essentially freely accessible from axial direction (hot marriage) .

When inserting respective spacer elements (not shown), which may be provided in the shape of axially extending bars or the like, in the air-gap 14 between the rotor 4 and the stator 5, the generator 1 may be easily transported without danger of the rotor 4 collapsing into the stator 5. Having arrived at a respective installation site, the rotor brake disc 21 may be mounted to the rotor 4, i. e. particularly a respective face side of the rotor 4. In such a manner, the radial dimensions, i. e. the outer diameter of the generator 1 may be reduced during transport which leads to the advantages regarding its transportability.

Although the present invention has been described in detail with reference to the preferred embodiment, the present invention is not limited by the disclosed examples from which the skilled person is able to derive other variations without departing from the scope of the invention.

## Claims

1. Generator (1), particularly for a wind turbine (2), comprising a rotor (4) having at least one rotor (4) brake disc (21) attached thereto, wherein the generator (1) has an outer rotor (4) - inner stator (5) configuration, whereby the rotor brake disc (21) extends in radial outward direction with respect to a centre axis (19) of the generator (1), or the generator (1) has an outer stator (5) - inner rotor (4) configuration, wherein the rotor brake disc (21) extends in radial inward direction with respect to a centre axis (19) of the generator (1).

2. Generator according to claim 1, wherein the stator (5) comprises a stator yoke (7) having a number of axially extending stator windings (9) ending in respective end windings (18), whereby three circumferentially adjacently disposed stator windings (9) build a respective set of stator windings (A, B, C), whereby, regarding a respective set of stator windings (A, B, C), in relation to an axial centre axis (19) of the stator (5), first end windings (18a) perpendicularly extend off the stator yoke (7) in radially outward direction, second end windings (18b) extend off the stator yoke (7) in axial direction, and third end windings (18c) perpendicularly extend off the stator yoke (7) in radially inward direction at at least one face side of the stator (5).

3. Generator according to claim 2, wherein respective sets of stator windings (A, B, C) are circumferentially repeatedly disposed in adjacent first, second, and third sets of stator windings (A, B, C), whereby each set of stator windings (A, B, C) comprises differently circumferentially arranged first, second, and third end windings (18a, 18b, 18c).

4. Generator according to claim 3, wherein respective sets of stator windings (A, B, C) are circumferentially repeatedly disposed in adjacent first, second, and third sets of stator windings (A, B, C), whereby
- a first set of stator windings (A) has a configuration of first end windings (18a) followed by second end windings (18b) followed by third end windings (18c),
- a second set of stator windings (B) being adjacently disposed to the first set of stator windings (A) has a configuration of second end windings (18b) followed by third end windings (18c) followed by first end windings (18a), and
- a third set of stator windings (C) being adjacently disposed to the second set of stator windings (B) has a configuration of third end windings (18c) followed by first end windings (18a) followed by second end windings (18b).

5. Generator according to one of the claims 2 to 4, wherein the rotor (4) comprises a rotor frame (10) supporting the rotor (4), with the rotor frame (10) comprising a radially extending section, whereby respectively orientated end windings (18a, 18b, 18c) are only built on the face side of the stator (5) that is turned away from the radially extending section of the rotor frame (10).

6. Generator according to one of the claims 2 to 5, wherein the radial dimensions of first or third end windings (18a, 18b) exceed the radial dimensions of an air-gap (14) between the rotor (4) and stator (5).

7. Generator according to one of the preceding claims, wherein the rotor (4) comprises axially extending receiving sections, particularly recesses (11), whereby a respective receiving section is adapted to at least partially receive at least one permanent magnet (12) or at least one base plate (13) supporting at least one permanent magnet (12).

8. Generator according to claim 7, wherein the rotor (4) comprises at least one radially extending projection (15) abutting the axial end of a respective receiving section.

9. Generator according to one of the preceding claims, wherein one face side of a permanent magnet (12) of the rotor (4) comprises at least one handle means.

10. Generator according to one of the preceding claims, wherein the stator (5) and/or the rotor (4) is built of a number of rotor segments and/or stator segments adapted to build the rotor (4) or stator (5) when assembled.

11. Wind turbine (2), particularly direct drive wind turbine (2), comprising a generator (1) according to one of the preceding claims.

12. Method for mounting a generator (1), particularly the generator (1) according to one of the preceding claims, comprising the steps of:
- providing a rotor (4) having at least one rotor brake disc (21) attached thereto, whereby the rotor brake disc (21) extends in radial outward or inward direction with respect to a centre axis (19) of the rotor (4), with the rotor (4) comprising a number of permanent magnets (12),
- axially inserting a stator (5) inside the rotor (4) if the rotor brake disc (21) extends in radial outward direction or
- axially inserting the rotor (4) inside a stator (5) if the rotor brake disc (21) extends in radial inward direction.

13. Method according to claim 12, wherein the used stator (5) comprises circumferentially insertion slots for inserting respective components of the rotor (4), particularly permanent magnets (12) of the rotor (4), with the insertion slots being provided by building sets of stator windings (A, B, C), with each set of stator windings (A, B, C) comprising three circumferentially adjacently disposed stator windings (9), whereby, regarding a respective set of stator windings (A, B, C), in relation to an axial centre axis (19) of the stator (5) first end windings (18a) perpendicularly extend off the stator yoke (7) in radially outward direction, second end windings (18b) extend off the stator yoke (7) in axial direction, and third end windings (18c) perpendicularly extend off the stator yoke (7) in radially inward direction at at least one face side of the stator (5).

14. Method according to claim 12 or 13, wherein at least one spacer element is inserted in an air-gap (14) between the stator (5) and the rotor (4) after axially inserting a stator (5) inside the rotor (4) if the rotor brake disc (21) extends in radial outward direction or axially inserting the rotor (4) inside a stator (5) if the rotor brake disc (21) extends in radial inward direction.
